# EUROPEAN PATENT SPECIFICATION

(11) **EP 4 674 725 B1**
(45) Date of publication and mention of the grant of the patent: **13.05.2026**
(21) Application number: 24195660.6
(22) Date of filing: 21.08.2024
(51) Int. Cl.: B62B 3/00, B62B 3/02, B62B 5/06

(54) **COLLAPSIBLE WAGON AND WAGON WITH HEIGHT REDUCED AFTER BEING FOLDED**
ZUSAMMENKLAPPBARER WAGEN UND WAGEN MIT NACH DEM ZUSAMMENKLAPPEN IN DER HÖHE REDUZIERTER HÖHE
WAGON PLIABLE ET WAGON AVEC HAUTEUR RÉDUITE APRÈS PLIAGE

(30) Priority: 02.07.2024 CN 202410878261; 02.07.2024 CN 202421544737 U
(43) Date of publication of application: 07.01.2026
(73) Proprietor: Jinhua Mutao Leisure Products Co., Ltd., Jinhua Zhejiang (CN)
(72) Inventor: ZHANG, Xiangshan, Suzhou (CN)
(74) Representative: Bayramoglu et al.

(56) References cited:
- CN-U- 219 339 485
- DE-U1- 202024 101 319
- US-A1- 2021 107 549

## Description

### TECHNICAL FIELD

The present invention relates to the technical field of wagons, and in particular to a collapsible wagon and a wagon with a reduced height after being folded.

### BACKGROUND TECHNOLOGY

In daily life and production, it is often necessary to use wagons to transport luggage or items. Wagons are widely used because they are convenient, time-saving, and effortless to push. Collapsible wagons are designed for easy storage. Collapsible wagons are lightweight and can be placed on the vehicle after being folded, making them easy to carry.

However, the existing collapsible wagon has a small capacity after being unfolded, only to store a small number of items, and has a large volume and takes up a lot of space after being folded. It is especially inconvenient to fold and store the collapsible wagon in a space-limited area such as a car trunk, seriously affecting the user experience. CN219339485U discloses a double-sliding-sleeve gathering trailer. The double-sliding-sleeve gathering trailer comprises a vertical rod assembly, a left side face folding assembly, a right side face folding assembly, a front side face folding assembly, a rear side face folding assembly, a bottom supporting assembly and a wheel assembly, wherein the vertical rod assembly comprises four vertical rods distributed in a rectangular shape, the upper end of each vertical rod is fixedly provided with an upper fixing base, and the lower end of each vertical rod is fixedly provided with a lower fixing base; a linkage sliding sleeve capable of vertically and freely sliding is arranged on each vertical rod. DE202024101319U1 discloses a lower support structure of a hand truck and hand cart. The lower support structure of the hand truck comprises a base and a castor wheel arranged below the base, wherein the base comprises a central joint, at least three link assemblies and at least three corner joints, the first end of each of the link assemblies being hingedly connected to the central joint, the second end of the link assembly being hingedly connected to one of the corner joints, and the corner joint being connected to a castor wheel, so that the base is formed in a foldable structure which is selectively unfolded or folded; each of the link assemblies comprises a first link member and a second link member, wherein when the base is unfolded, the first link member is arranged above the second link member, so that the base is formed in a two-story structure. US2021/107549A1 discloses a folding wagon frame. The folding frame has corner posts including a front right post, a front left post, a rear right post, and a rear left post. Upper corner joints include a front right upper joint on the front right post, a front left upper joint on the front left post, a rear right upper joint on the rear right post, and a rear left upper j oint on the rear left post. Slide joints are slidingly mounted below the upper corner joints on the corner posts and include a front right slide joint on the front right post, a front left slide joint on the front left post, a rear right slide joint on the rear right post, and a rear left slide joint on the rear left post.

### CONTENT OF THE INVENTION

### (I) Technical Problem to Be Solved

In view of the above defects and shortcomings of the prior art, the present invention is defined in claim 1 and provides a wagon with a height reduced after being folded. The present invention solves the technical problem that the existing collapsible wagon has a small unfolded capacity and a large folded volume.

### (II) Technical Solution

In order to achieve the above objective, a wagon according to claim 1 is provided. Preferred embodiments are defined in the dependent claims. The present disclosure provides a wagon with a height reduced after being folded, comprising a collapsible wagon, wherein the collapsible wagon includes four standing posts arranged in a rectangle pattern and at intervals, a bottom folding mechanism hinged between the four standing posts, a first folding mechanism, a third folding mechanism, a second folding mechanism, and a fourth folding mechanism that are arranged in sequence and respectively connected between adjacent two standing posts, and first sliding sleeves respectively slidably provided on the standing posts, where the first sliding sleeves are respectively hinged to short tubes;
each of the first folding mechanism and the second folding mechanisms includes a first crossing assembly, at least one third crossing assembly, and a second crossing assembly that are hinged in sequence; each of the first crossing assembly and the second crossing assembly includes a first cross tube and a second cross tube; the first cross tube is hinged to an upper end of the corresponding standing post, and the short tube is hinged to the first cross tube; the short tube is provided with a second sliding sleeve; and the second cross tube is hinged to the second sliding sleeve of the corresponding short tube; and
folded heights of the first crossing assembly, the third crossing assembly, the second crossing assembly, the third folding mechanism, the fourth folding mechanism and the bottom folding mechanism are not greater than a height of the upper end of the standing post; the wagon with the height reduced after being folded further comprises lifting tubes; wherein an end of the lifting tube is hinged to the second sliding sleeve, and the lifting tube is slidably connected to the upper end of the corresponding standing post; and upper ends of the four lifting tubes are configured to be respectively connected to four corners of a fabric bed of the wagon with the height reduced after being folded; when the collapsible wagon changes from a folded state to an unfolded state, the upper ends of the lifting tubes move vertically away from the upper ends of the standing posts when a wagon frame is unfolded; and when the collapsible wagon changes from the unfolded state to the folded state, the upper ends of the lifting tubes vertically approach the upper ends of the standing posts when the wagon frame is folded; and a height of the collapsible wagon in the folded state is smaller than a height of the collapsible wagon in the unfolded state, and the height of the collapsible wagon is reduced after the collapsible wagon is folded.

Optionally, the collapsible wagon further includes a first suspension rod and a second suspension rod;
an upper end of the first suspension rod is hinged to the first folding mechanism; an upper end of the second suspension rod is hinged to the second folding mechanism; and a lower end of the first suspension rod and a lower end of the second suspension rod are connected to the bottom folding mechanism; and
the first suspension rod and the second suspension rod are flexible rods; and in a process of folding the collapsible wagon, the first suspension rod and the second suspension rod deform, and the two ends of the first suspension rod respectively approach the two ends of the second suspension rod.

Optionally, the bottom folding mechanism includes a first bottom support assembly and a second bottom support assembly that are symmetrically arranged and hinged to each other; and each of the first bottom support assembly and the second bottom support assembly includes a first bottom connector, a first bottom connecting tube, a second bottom connecting tube, a third bottom connecting tube, and a fourth bottom connecting tube;
first ends of the first bottom connecting tube, the second bottom connecting tube, the third bottom connecting tube and the fourth bottom connecting tube are rotatably connected at a limited angle to the first bottom connector; and
second ends of the first bottom connecting tube and the second bottom connecting tube are respectively rotatably connected at a limited angle to lower ends of corresponding standing posts.

Optionally, the bottom folding mechanism further includes a second bottom connector and a third bottom connector that are symmetrically arranged; and the lower end of the first suspension rod and the lower end of the second suspension rod are respectively connected to the second bottom connector and the third bottom connector;
the third bottom connecting tube of the first bottom support assembly and the third bottom connecting tube of the second bottom support assembly are rotatably connected at a limited angle to the third bottom connector; and
the fourth bottom connecting tube of the first bottom support assembly and the fourth bottom connecting tube of the second bottom support assembly are rotatably connected at a limited angle to the second bottom connector.

Optionally, the four standing posts are a first standing post, a second standing post, a third standing post, and a fourth standing post, respectively;
each of the third folding mechanism and the fourth folding mechanism includes a first crossing tube and a second crossing tube that are hinged to each other, as well as a third crossing tube and a fourth crossing tube that are hinged to each other; first ends of the first crossing tube and the third crossing tube are hinged to each other; and first ends of the second crossing tube and the fourth crossing tube are hinged to each other;
in the fourth folding mechanism, a second end of the first crossing tube is hinged to an upper end of the fourth standing post, a second end of the third crossing tube is hinged to an upper end of the first standing post, a second end of the second crossing tube is hinged to the first sliding sleeve on the fourth standing post, and a second end of the fourth crossing tube is hinged to the first sliding sleeve on the first standing post; and
in the third folding mechanism, a second end of the first crossing tube is hinged to an upper end of the second standing post, a second end of the third crossing tube is hinged to an upper end of the third standing post, a second end of the second crossing tube is hinged to the first sliding sleeve on the second standing post, and a second end of the fourth crossing tube is hinged to the first sliding sleeve on the third standing post.

Optionally, the collapsible wagon further includes a handle mechanism;
the handle mechanism includes a telescopic rod, a first horizontal tube, a second horizontal tube, and a limiting member; and the telescopic rod is slidably connected to the limiting member; and
first ends of the first horizontal tube and the second horizontal tube are respectively rotatably connected at a limited angle to two ends of the limiting member; and second ends of the first horizontal tube and the second horizontal tube are respectively rotatably connected to lower ends of two standing posts connected to the fourth folding mechanism.

Optionally, the upper ends of the lifting tubes are respectively provided with connecting members, and the connecting members are respectively connected to the corners of the fabric bed of the wagon with the height reduced after being folded.

### (III) Beneficial Effects

Firstly, the short tube serves as an accessory structure, effectively increasing the lengths of the second cross tube and the first cross tube, thereby increasing the unfolded lengths of the first folding mechanism and the second folding mechanism. The design increases the capacity of the collapsible wagon unfolded while keeping the number of the crossing assemblies constant. If the volume of the collapsible wagon unfolded is increased by increasing the number of the crossing assemblies, it will increase the weight of the collapsible wagon and make it inconvenient for the transportation of the wagon vertically. Secondly, when the wagon is unfolded, the angle between the short tube and the standing post is smaller than the angle between the second cross tube and the standing post. To fold the wagon, the first sliding sleeve slides downward, and the second sliding sleeve slides towards the first end of the short tube. A smaller angle between the short tube and the standing post leads to a smaller angle between the direction of the force exerted by the short tube on the first sliding sleeve and the axial direction of the standing post. A greater force on the first sliding sleeve results in smoother sliding of the first sliding sleeve. Thirdly, the short tube reduces the angle between the short tube and the second cross tube. Similarly, the sliding of the second sliding sleeve is smoother, improving the smoothness of folding the wagon.

The folded heights of the first crossing assembly, the third crossing assembly, the second crossing assembly, the third folding mechanism, the fourth folding mechanism and the bottom folding mechanism are not greater than the height of the upper end of the standing post, ensuring that the folded height of the wagon does not increase, making it convenient for the user to store and carry the wagon.

### DESCRIPTION OF THE DRAWINGS

FIG. 1 is a structural diagram of a collapsible wagon according to the present disclosure;
FIG. 2 is a three-dimensional diagram of the collapsible wagon according to the present disclosure;
FIG. 3 is a front view of the collapsible wagon according to the present disclosure;
FIG. 4 is a left view of the collapsible wagon according to the present disclosure;
FIG. 5 is a right view of the collapsible wagon according to the present disclosure;
FIG. 6 is a top view of the collapsible wagon according to the present disclosure;
FIG. 7 is a structural diagram of the collapsible wagon in a folded state according to the present disclosure;
FIG. 8 is a structural diagram of a wagon with a height reduced after being folded according to the present invention;
FIG. 9 is a front view of the wagon with a height reduced after being folded according to the present disclosure;
FIG. 10 is a left view of the wagon with a height reduced after being folded according to the present disclosure; and
FIG. 11 is a structural diagram of the wagon with a height reduced after being folded in a folded state according to the present disclosure.

### [Reference Numerals]

1. standing post; 11. first standing post; 12. second standing post; 13. third standing post; and 14. fourth standing post;
2. bottom folding mechanism; 21. first bottom support assembly; and 22. second bottom support assembly;
210. first bottom connector; 211. first bottom connecting tube; 212. second bottom connecting tube; 213. third bottom connecting tube; 214. fourth bottom connecting tube; 216. second bottom connector; and 215. third bottom connector;
31. first folding mechanism; 32. second folding mechanism; 33. third folding mechanism; and 34. fourth folding mechanism;
311. first crossing assembly; 312. second crossing assembly; and 313. third crossing assembly;
3111. first cross tube; 3112. second cross tube; 3113. third cross tube; and 3114. fourth cross tube;
341. first crossing tube; 342. second crossing tube; 343. third crossing tube; and 344. fourth crossing tube;
41. first sliding sleeve; and 42. second sliding sleeve;
5. short tube;
6. handle mechanism; 60. telescopic rod; 61. first horizontal tube; 62. second horizontal tube; and 63. limiting member;
71. first suspension rod; and 72. second suspension rod;
8. caster; and
100. lifting tube; and 104. connecting member.

### SPECIFIC IMPLEMENTATION

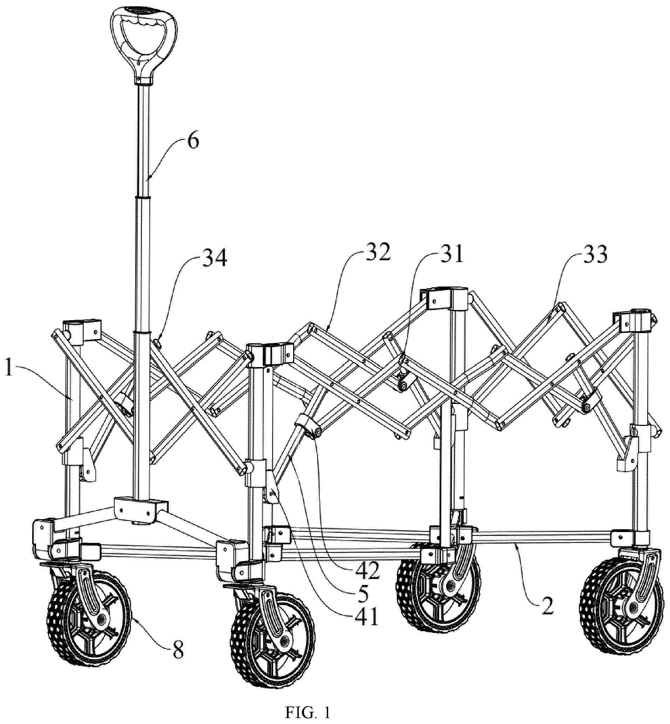

To facilitate a better understanding of the present disclosure, the present disclosure is described in detail below with reference to the drawings and specific embodiments. The terms such as "upper" and "lower" mentioned herein are based on the orientations shown in FIG. 1.

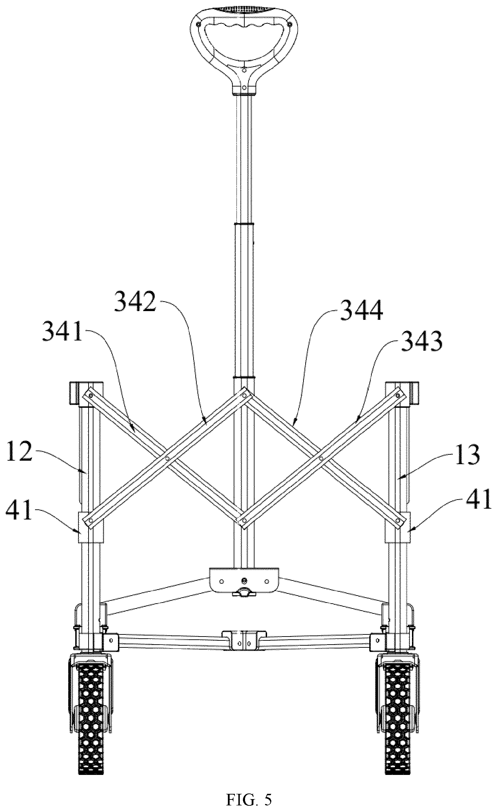

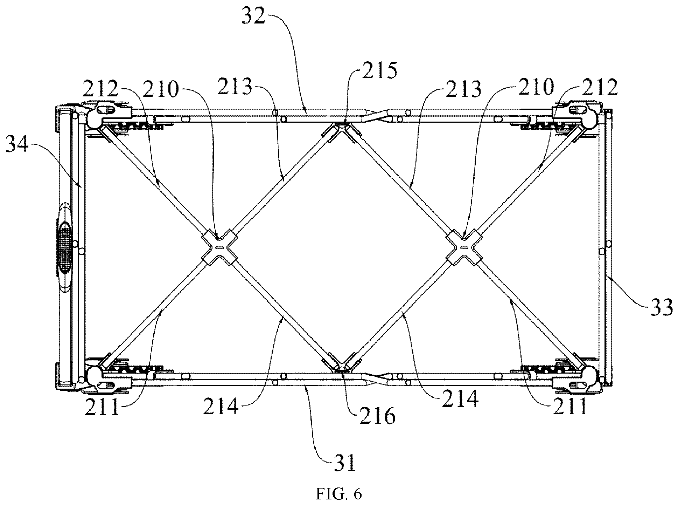

As shown in FIGS. 1 to 7, the present disclosure provides a collapsible wagon and a wagon with a height reduced after being folded. The collapsible wagon includes four standing posts 1 arranged in a rectangle pattern and at intervals, bottom folding mechanism 2 hinged between the four standing posts 1 through hinge points that are located at lower ends of the standing posts 1, first folding mechanism 31, third folding mechanism 33, second folding mechanism 32, and fourth folding mechanism 34 that are arranged in sequence and respectively connected between adjacent two standing posts 1, and first sliding sleeves 41 respectively slidably provided on the standing posts 1. The first sliding sleeves 41 are respectively hinged to short tubes 5. Furthermore, the four standing posts 1 are respectively first standing post 11, second standing post 12, third standing post 13, and fourth standing post 14. The standing posts 1 are slidably provided with the first sliding sleeves 41, respectively. The first sliding sleeves 41 each are hinged to one short tube 5, with a hinge point located at a first end of the short tube 5. The first folding mechanism 31 is connected between the first standing post 11 and the second standing post 12, the second folding mechanism 32 is connected between the third standing post 13 and the fourth standing post 14, the third folding mechanism 33 is connected between the second standing post 12 and the third standing post 13, and the fourth folding mechanism 34 is connected between the first standing post 11 and the fourth standing post 14.

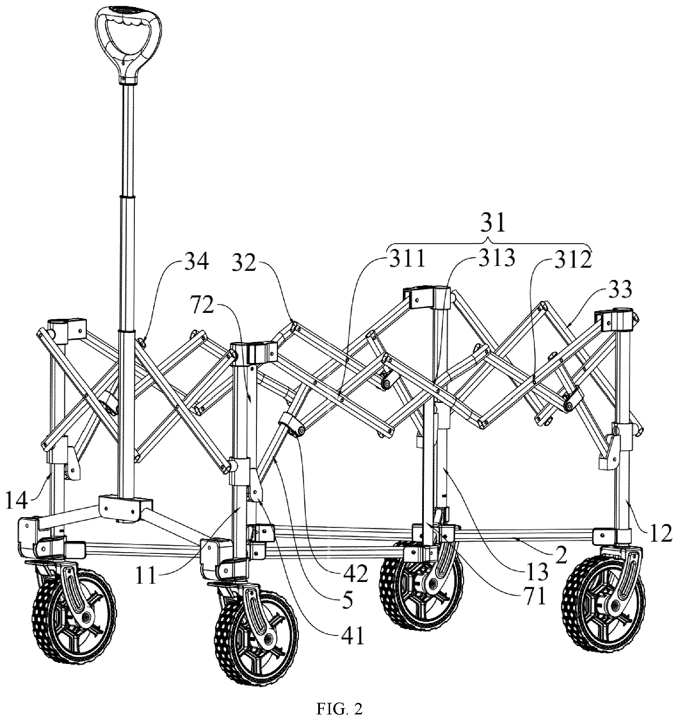

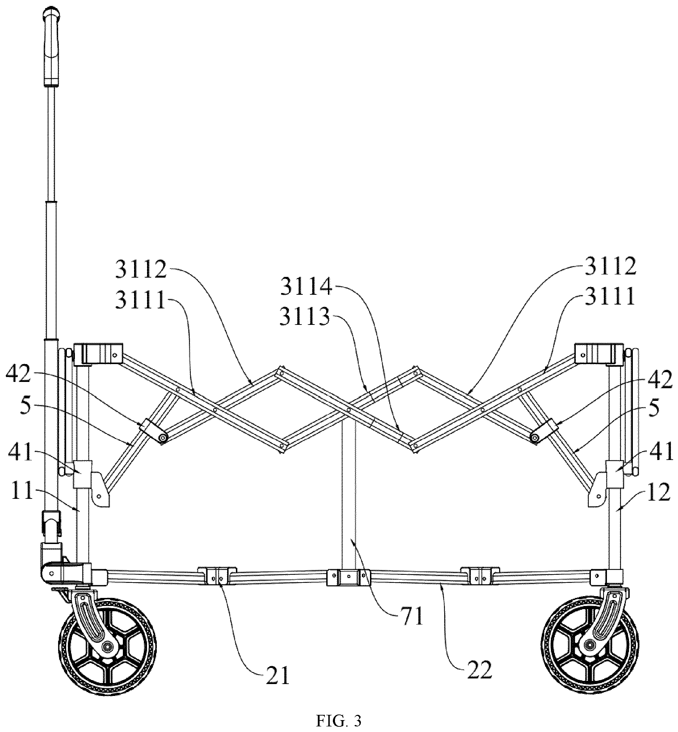

As shown in FIGS. 2 and 3, each of the first folding mechanism 31 and the second folding mechanism 32 includes first crossing assembly 311, third crossing assembly 313, and second crossing assembly 312 that are hinged in sequence. There may be one or more than one third crossing assembly 313. If there are multiple third crossing assemblies 313, the multiple third crossing assemblies are hinged in sequence. Each of the first crossing assembly 311 and the second crossing assembly 312 includes first cross tube 3111 and second cross tube 3112 that are hinged to each other, and the third crossing assembly 313 includes third cross tube 3113 and fourth cross tube 3114 that are hinged to each other. Two ends of the third cross tube 3113 are hinged to the first cross tube 3111 of the first crossing assembly 311 and the second cross tube 3112 of the second crossing assembly 312, respectively. Two ends of the fourth cross tube 3114 are hinged to the second cross tube 3112 of the first crossing assembly 311 and the first cross tube 3111 of the second crossing assembly 312, respectively. In the first crossing assembly 311 and the second crossing assembly 312, the first crossing assembly 311 and the second crossing assembly 312 have the same structure and symmetrical positions. The first cross tube 3111 of the first crossing assembly 311 is hinged to an upper end of the first standing post 11, and the first cross tube 3111 of the second crossing assembly 312 is hinged to an upper end of the second standing post 12. For example, in the first crossing assembly 311, a second end of the short tube 5 is hinged to a tube body of the first cross tube 3111 of the first crossing assembly 311. The short tube 5 is provided with second sliding sleeve 42. An end of the second cross tube 3112 of the first crossing assembly 311 is hinged to the second sliding sleeve 42 on the short tube 5.

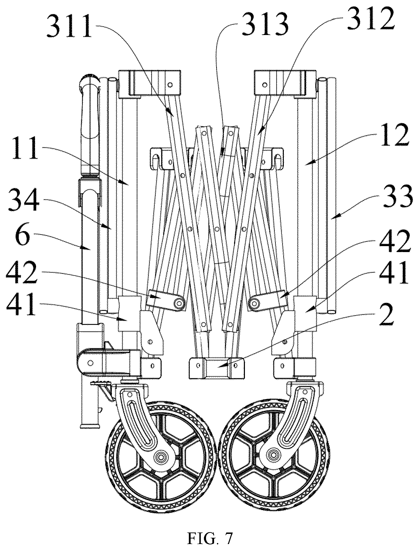

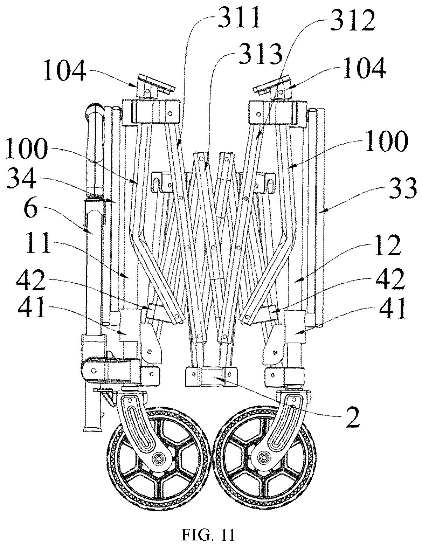

Firstly, the short tube 5 serves as an accessory structure, effectively increasing the lengths of the second cross tube 3112 and the first cross tube 3111, thereby increasing the unfolded lengths of the first folding mechanism 31 and the second folding mechanism 32. The design increases the capacity of the collapsible wagon unfolded while keeping the number of the crossing assemblies constant. If the volume of the collapsible wagon unfolded is increased by increasing the number of the crossing assemblies, it will increase the weight of the collapsible wagon and make it inconvenient for the transportation of the wagon vertically. Secondly, when the wagon is unfolded, the angle between the short tube 5 and the standing post 1 is smaller than the angle between the second cross tube 3112 and the standing post 1. To fold the wagon, the first sliding sleeve 41 slides downward, and the second sliding sleeve 42 slides towards the first end of the short tube 5. A smaller angle between the short tube 5 and the standing post 1 leads to a smaller angle between the direction of the force exerted by the short tube 5 on the first sliding sleeve 41 and the axial direction of the standing post 1. A greater force on the first sliding sleeve results in smoother sliding of the first sliding sleeve 41. Thirdly, the short tube 5 reduces the angle between the short tube 5 and the second cross tube 3112. Similarly, the sliding of the second sliding sleeve 42 is smoother, improving the smoothness of folding the wagon. Referring to FIGS. 7 and 11, the folded heights of the first crossing assembly 311, the third crossing assembly 313, the second crossing assembly 312, the third folding mechanism 33, the fourth folding mechanism 34 and the bottom folding mechanism 2 are not greater than the height of the upper end of the standing post 1, ensuring that the folded height of the wagon does not increase, making it convenient for the user to store and carry the wagon.

In a preferred implementation, each of the first folding mechanism 31 and the second folding mechanism 32 includes the first crossing assembly 311, the third crossing assembly 313, and the second crossing assembly 312 that are hinged in sequence. The design ensures that the wagon has a large unfolded capacity in addition to a small folded volume, improving the user experience.

As shown in FIGS. 2 and 3, the collapsible wagon further includes first suspension rod 71 and second suspension rod 72. An upper end of the first suspension rod 71 is hinged to the first folding mechanism 31, and an upper end of the second suspension rod 72 is hinged to the second folding mechanism 32. A lower end of the first suspension rod 71 and a lower end of the second suspension rod 72 are connected to front and rear sides of the bottom folding mechanism 2, respectively. When the collapsible wagon is in an unfolded state, it exerts an upward pulling force on the bottom folding mechanism 2, increasing the support force of the bottom folding mechanism 2. Moreover, the first suspension rod 71 and the second suspension rod 72 are flexible rods, and can even be slings such as cloth straps and steel cables. During the folding process of the collapsible wagon, the first suspension rod 71 and the second suspension rod 72 deform, and the two ends of the first suspension rod 71 respectively approach the two ends of the second suspension rod 72.

As shown in FIGS. 1 to 3 and 6, the bottom folding mechanism 2 includes first bottom support assembly 21 and second bottom support assembly 22 that are symmetrically arranged and hinged to each other. Each of the first bottom support assembly 21 and the second bottom support assembly 22 includes first bottom connector 210, first bottom connecting tube 211, second bottom connecting tube 212, third bottom connecting tube 213, and fourth bottom connecting tube 214. First ends of the first bottom connecting tube 211, the second bottom connecting tube 212, the third bottom connecting tube 213 and the fourth bottom connecting tube 214 of the first bottom support assembly 21 are rotatably connected at a limited angle to the first bottom connector 210 of the first bottom support assembly 21. First ends of the first bottom connecting tube 211, the second bottom connecting tube 212, the third bottom connecting tube 213 and the fourth bottom connecting tube 214 of the second bottom support assembly 22 are rotatably connected at a limited angle to the first bottom connector 210 of the second bottom support assembly 22. Specifically, for example, in the first bottom support assembly 21, the first bottom connector 210 is provided with four symmetrically arranged mounting slots. When the wagon is unfolded, a bottom of the mounting slot is horizontal, and open downward. The first end of each bottom connecting tube is located in the corresponding mounting slot and rotatably connected to an inner wall of the mounting slot. When each bottom connecting tube rotates upward relative to the first bottom connector 210 from a folded tilted state until a tube wall contacts the bottom of the mounting slot, each bottom connecting tube is restricted by the mounting slot and cannot continue to rotate, thus maintaining a horizontal state and providing effective support for the bottom of the wagon. Second ends of the first bottom connecting tube 211 and the second bottom connecting tube 212 are respectively rotatably connected at a limited angle to lower ends of corresponding standing posts 1. The structural form is similar to that of the first bottom connector 210, except for the only difference that the mounting slot is open upward to restrict the first bottom connecting tube 211 and the second bottom connecting tube 212 such that they can only rotate downward relative to the mounting slot at the lower end of the standing post 1 from the folded tilted state to the horizontal state.

Furthermore, as shown in FIGS. 1, 2, and 6, the bottom folding mechanism 2 further includes symmetrically arranged second bottom connector 216 and third bottom connector 215. The lower end of the first suspension rod 71 and the lower end of the second suspension rod 72 are respectively connected to the second bottom connector 216 and the third bottom connector 215. The third bottom connecting tube 213 of the first bottom support assembly 21 and the third bottom connecting tube 213 of the second bottom support assembly 22 are rotatably connected at a limited angle to the third bottom connector 215. The fourth bottom connecting tube 214 of the first bottom support assembly 21 and the fourth bottom connecting tube 214 of the second bottom support assembly 22 are rotatably connected at a limited angle to the second bottom connector 216. The connection form is similar to that of the first bottom connector 210, except for the only difference that the mounting slots of the second bottom connector 216 and the third bottom connector 215 are open upward to restrict the third bottom connector 213 and the fourth bottom connector 214 such that they can only rotate downward relative to the mounting slots of the second bottom connector 216 and the third bottom connector 215 from the folded tilted state to the horizontal state. When the wagon needs to be folded, first, the two first bottom connectors 210 are driven to move upward. The four bottom connecting tubes connected to the corresponding first bottom connectors 210 rotate from the unfolded horizontal state to the tilted state. The bottom connecting tubes converge with each other, thereby driving the four standing posts 1 to converge with each other. The four standing posts 1 press the first folding mechanism 31, the third folding mechanism 33, the second folding mechanism 32, and the fourth folding mechanism 34 to fold. The first suspension rod 71 and the second suspension rod 72 deform, and the two ends of the first suspension rod 71 respectively approach the two ends of the second suspension rod 72.

As shown in FIGS. 1, 4, and 5, each of the third folding mechanism 33 and the fourth folding mechanism 34 includes first crossing tube 341 and second crossing tube 342 that are hinged to each other, as well as third crossing tube 343 and fourth crossing tube 344 that are hinged to each other. First ends of the first crossing tube 341 and the third crossing tube 343 are hinged to each other, and first ends of the second crossing tube 342 and the fourth crossing tube 344 are hinged to each other. In the fourth folding mechanism 34, a second end of the first crossing tube 341 is hinged to an upper end of the fourth standing post 14, and a second end of the third crossing tube 343 is hinged to an upper end of the first standing post 11. A second end of the second crossing tube 342 is hinged to the first sliding sleeve 41 on the fourth standing post 14, and a second end of the fourth crossing tube 344 is hinged to the first sliding sleeve 41 on the first standing post 11. In the third folding mechanism 33, a second end of the first crossing tube 341 is hinged to an upper end of the second standing post 12, and a second end of the third crossing tube 343 is hinged to an upper end of the third standing post 13. A second end of the second crossing tube 342 is hinged to the first sliding sleeve 41 on the second standing post 12, and a second end of the fourth crossing tube 344 is hinged to the first sliding sleeve 41 on the third standing post 13.

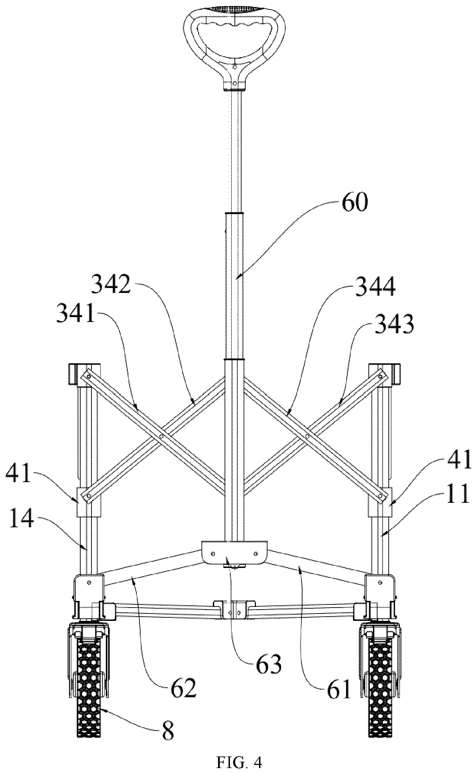

As shown in FIG. 1, the collapsible wagon further includes handle mechanism 6. Specifically, referring to FIG. 4, the handle mechanism 6 includes telescopic rod 60, first horizontal tube 61, second horizontal tube 62, and limiting member 63. The telescopic rod 60 is slidably connected to the limiting member 63. First ends of the first horizontal tube 61 and the second horizontal tube 62 are respectively rotatably connected to two ends of the limiting member 63. Specifically, the first end of the first horizontal tube 61 is rotatably connected to a first end of the limiting member 63, and the first end of the second horizontal tube 62 is rotatably connected to a second end of the limiting member 63. The first horizontal tube 61 and the second horizontal tube 62 are restricted by the limiting member 63 such that the first horizontal tube 61 and the second horizontal tube 62 can only rotate upward around the limiting member 63 from the folded tilted state to get close to the horizontal state or rotate downward around the limiting member 63 from the unfolded tilted state to get close to a vertical state. In the folding process, the first horizontal tube 61 and the second horizontal tube 62 rotate, and then the telescopic rod 60 slides downward, thereby reducing the height of the telescopic rod 60. Meanwhile, the telescopic rod 60 retracts, further reducing the height of the telescopic rod 60. Thus, the height of the handle mechanism 6 folded is not greater than the height of the standing post 1. The second ends of the first horizontal tube 61 and the second horizontal tube 62 are respectively rotatably connected to rotating components located at the lower ends of the first standing post 11 and the fourth standing post 14. A rotating shaft of the rotating component is perpendicular to rotating shafts of a first crossbar and a second crossbar. When the rotating component rotates, a free end of the telescopic rod 60 moves away from or close to the wagon. When the free end of the telescopic rod 60 moves away from the wagon, there is a certain angle between the telescopic rod 60 and a plane where the first standing post 11 and the fourth standing post 14 are located, which facilitates the user's dragging. A second end of the telescopic rod 60 is connected to a pull tab, further facilitating the user to drag the wagon. A caster 8 is provided at a lower end of each of the first standing posts 1. Preferably, the caster 8 provided at the lower end of each of the first standing post 11 and the fourth standing post 14 is a universal wheel, which facilitates the turning of the wagon.

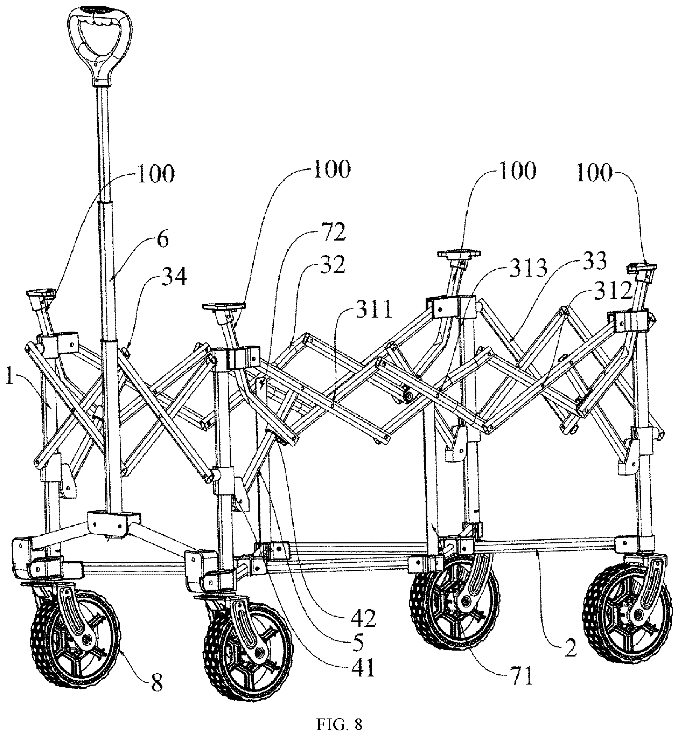

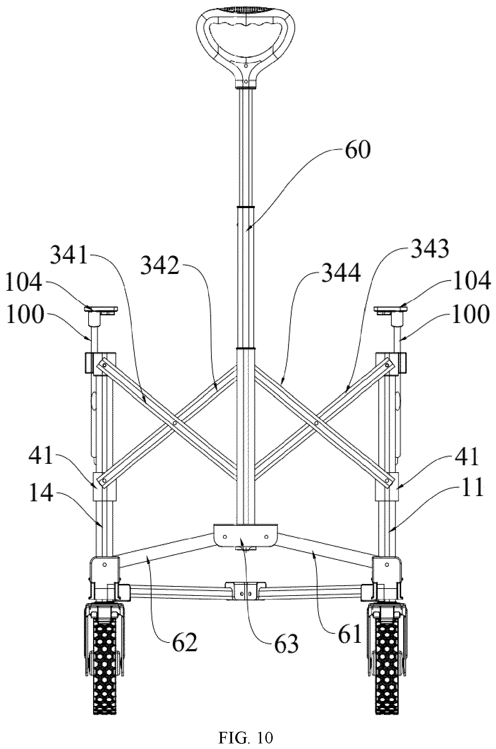

As shown in FIG. 8 to 11, the present disclosure further provides a wagon with a height reduced after being folded, including lifting tubes and the above collapsible wagon. The structure of the collapsible wagon is shown in FIGS. 1 to 7. Each second sliding sleeve 42 of the collapsible wagon is hinged to one lifting tube 100, with a hinge point located at a lower end of the lifting tube 100. For example, in the connection structure between the first crossing assembly 311 and the lifting tube 100, the lower end of the lifting tube 100 is hinged to the second sliding sleeve 42 on the short tube 5 connected to the first crossing assembly 311, and a tube body of the lifting tube 100 is slidably connected to a top fixing element on the upper end of the first standing post 11. Upper ends of the four lifting tubes 100 are configured to be respectively connected to four corners of a fabric bed of the wagon with the height reduced after being folded. When the wagon changes from the unfolded state to the folded state, the upper ends of the lifting tubes 100 slide downward, thereby reducing the height of the collapsible wagon.

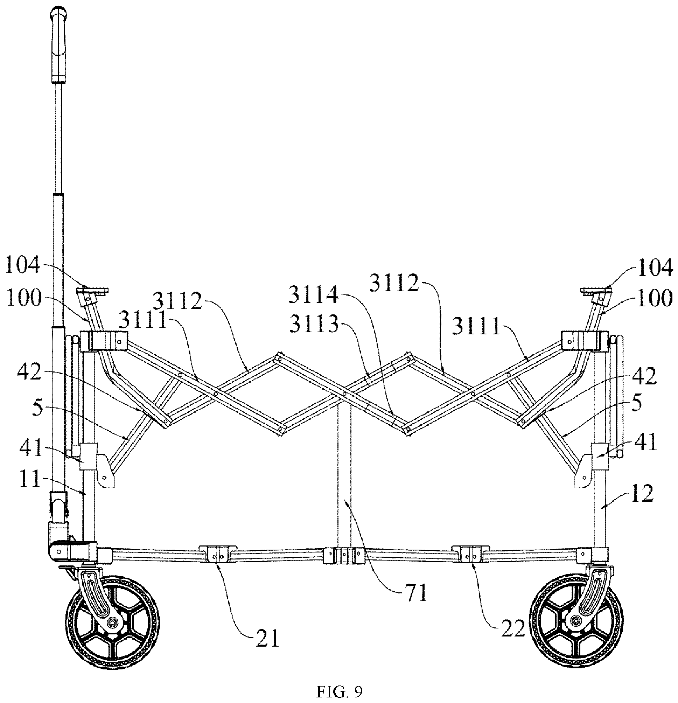

Referring to FIGS. 8 to 10, when the collapsible wagon changes from the folded state to the unfolded state, the upper ends of the lifting tube 100 move vertically away from the upper ends of the standing posts 1. The lifting tubes 100 lift a top of the fabric bed of the wagon upward to a height above the upper ends of standing posts 1, thereby increasing the overall height and capacity of the wagon. When the collapsible wagon changes from the unfolded state to the folded state, the upper ends of the lifting tubes 100 vertically approach the upper ends of the standing posts 1, such that the height of the collapsible wagon in the folded state is smaller than the height of the collapsible wagon in the unfolded state, and the height of the collapsible wagon is reduced after the collapsible wagon is folded. Specifically, to unfold the wagon, the upper ends of the lifting tubes 100 slide away from the upper ends of the standing posts 1. The unfolded state is shown in FIGS. 8 and 9, where the unfolded height of the wagon is greater than the folded height of the wagon, increasing the capacity of the wagon. To fold the wagon, the upper ends of the lifting tubes 100 slide down close to the upper ends of the standing posts 1. The folded state is shown in FIG. 11, where the folded height of the wagon is smaller than the unfolded height of the wagon. Therefore, the height of the wagon folded is reduced, thereby reducing the folded volume of the wagon and making it easy for the user to carry and store.

Furthermore, the upper ends of the lifting tubes 100 are respectively provided with connecting members 104, and the connecting members 104 are respectively connected to the corners of the fabric bed of the wagon with the height reduced after being folded.

## Claims

1. A wagon with a height reduced after being folded, comprising a collapsible wagon, wherein the collapsible wagon comprises four standing posts (1) arranged in a rectangle pattern and at intervals, a bottom folding mechanism (2) hinged between the four standing posts (1), a first folding mechanism (31), a third folding mechanism (33), a second folding mechanism (32), and a fourth folding mechanism (34) that are arranged in sequence and respectively connected between adjacent two standing posts (1), and first sliding sleeves (41) respectively slidably provided on the standing posts (1), wherein the first sliding sleeves (41) are respectively hinged to short tubes (5);
each of the first folding mechanism (31) and the second folding mechanism (32) comprises a first crossing assembly (311) and a second crossing assembly (312);
each of the first crossing assembly (311) and the second crossing assembly (312) comprises a first cross tube (3111) and a second cross tube (3112); the first cross tube (3111) is hinged to an upper end of the corresponding standing post (1), and the short tube (5) is hinged to the first cross tube (3111); the short tube (5) is provided with a second sliding sleeve (42); and the second cross tube (3112) is hinged to the second sliding sleeve (42) of the corresponding short tube (5); and
folded heights of the first crossing assembly (311), the second crossing assembly (312), the third folding mechanism (33), the fourth folding mechanism (34) and the bottom folding mechanism (2) are not greater than a height of the upper end of the standing post (1);
**characterized in that**
each of the first folding mechanism (31) and the second folding mechanism (32) further comprises at least one third crossing assembly (313), the first, third and second crossing assemblies are hinged in sequence; the folded height of the third crossing assembly (313) is not greater than a height of the upper end of the standing post (1);
the wagon with the height reduced after being folded further comprises lifting tubes; wherein an end of the lifting tube (100) is hinged to the second sliding sleeve (42), and the lifting tube (100) is slidably connected to the upper end of the corresponding standing post (1); and upper ends of the four lifting tubes (100) are configured to be respectively connected to four corners of a fabric bed of the wagon with the height reduced after being folded;
when the collapsible wagon changes from a folded state to an unfolded state, the upper ends of the lifting tubes (100) move vertically away from the upper ends of the standing posts (1) when a wagon frame is unfolded; and when the collapsible wagon changes from the unfolded state to the folded state, the upper ends of the lifting tubes (100) vertically approach the upper ends of the standing posts (1) when the wagon frame is folded; and
a height of the collapsible wagon in the folded state is smaller than a height of the collapsible wagon in the unfolded state, and the height of the collapsible wagon is reduced after the collapsible wagon is folded.

2. The wagon with the height reduced after being folded according to claim 1, **characterized in that** the collapsible wagon further comprises a first suspension rod (71) and a second suspension rod (72);
an upper end of the first suspension rod (71) is hinged to the first folding mechanism (31); an upper end of the second suspension rod (72) is hinged to the second folding mechanism (32); and a lower end of the first suspension rod (71) and a lower end of the second suspension rod (72) are connected to the bottom folding mechanism (2); and
the first suspension rod (71) and the second suspension rod (72) are flexible rods; and in a process of folding the collapsible wagon, the first suspension rod (71) and the second suspension rod (72) deform, and the two ends of the first suspension rod (71) respectively approach the two ends of the second suspension rod (72).

3. The wagon with the height reduced after being folded according to claim 2, **characterized in that** the bottom folding mechanism (2) comprises a first bottom support assembly (21) and a second bottom support assembly (22) that are symmetrically arranged and hinged to each other; and each of the first bottom support assembly (21) and the second bottom support assembly (22) comprises a first bottom connector (210), a first bottom connecting tube (211), a second bottom connecting tube (212), a third bottom connecting tube (213), and a fourth bottom connecting tube (214);
first ends of the first bottom connecting tube (211), the second bottom connecting tube (212), the third bottom connecting tube (213) and the fourth bottom connecting tube (214) are rotatably connected at a limited angle to the first bottom connector (210); and
second ends of the first bottom connecting tube (211) and the second bottom connecting tube (212) are respectively rotatably connected at a limited angle to lower ends of corresponding standing posts (1).

4. The wagon with the height reduced after being folded according to claim 3, **characterized in that** the bottom folding mechanism (2) further comprises a second bottom connector (216) and a third bottom connector (215) that are symmetrically arranged; and the lower end of the first suspension rod (71) and the lower end of the second suspension rod (72) are respectively connected to the second bottom connector (216) and the third bottom connector (215);
the third bottom connecting tube (213) of the first bottom support assembly (21) and the third bottom connecting tube (213) of the second bottom support assembly (22) are rotatably connected at a limited angle to the third bottom connector (215); and
the fourth bottom connecting tube (214) of the first bottom support assembly (21) and the fourth bottom connecting tube (214) of the second bottom support assembly (22) are rotatably connected at a limited angle to the second bottom connector (216).

5. The wagon with the height reduced after being folded according to claim 1, **characterized in that** the four standing posts (1) are a first standing post (11), a second standing post (12), a third standing post (13), and a fourth standing post (14), respectively;
each of the third folding mechanism (33) and the fourth folding mechanism (34) comprises a first crossing tube (341) and a second crossing tube (342) that are hinged to each other, as well as a third crossing tube (343) and a fourth crossing tube (344) that are hinged to each other; first ends of the first crossing tube (341) and the third crossing tube (343) are hinged to each other; and first ends of the second crossing tube (342) and the fourth crossing tube (344) are hinged to each other;
in the fourth folding mechanism (34), a second end of the first crossing tube (341) is hinged to an upper end of the fourth standing post (14), a second end of the third crossing tube (343) is hinged to an upper end of the first standing post (11), a second end of the second crossing tube (342) is hinged to the first sliding sleeve (41) on the fourth standing post (14), and a second end of the fourth crossing tube (344) is hinged to the first sliding sleeve (41) on the first standing post (11); and
in the third folding mechanism (33), a second end of the first crossing tube (341) is hinged to an upper end of the second standing post (12), a second end of the third crossing tube (343) is hinged to an upper end of the third standing post (13), a second end of the second crossing tube (342) is hinged to the first sliding sleeve (41) on the second standing post (12), and a second end of the fourth crossing tube (344) is hinged to the first sliding sleeve (41) on the third standing post (13).

6. The wagon with the height reduced after being folded according to claim 1, **characterized in that** the collapsible wagon further comprises a handle mechanism (6);
the handle mechanism (6) comprises a telescopic rod (60), a first horizontal tube (61), a second horizontal tube (62), and a limiting member (63); and the telescopic rod (60) is slidably connected to the limiting member (63); and
first ends of the first horizontal tube (61) and the second horizontal tube (62) are respectively rotatably connected at a limited angle to two ends of the limiting member (63); and second ends of the first horizontal tube (61) and the second horizontal tube (62) are respectively rotatably connected to lower ends of two standing posts (1) connected to the fourth folding mechanism (34).

7. The wagon with the height reduced after being folded according to claim 1, **characterized in that** the upper ends of the lifting tubes (100) are respectively provided with connecting members (104), and the connecting members (104) are respectively connected to the corners of the fabric bed of the wagon with the height reduced after being folded.

## Patentansprüche

1. Ein Wagen mit einer nach dem Falten verringerten Höhe, umfassend einen zusammenklappbaren Wagen, wobei der zusammenklappbare Wagen vier in einem rechteckigen Muster und in Abständen angeordnete Ständer (1) umfasst, einen zwischen den vier Ständern (1) angelenkten unteren Faltmechanismus (2), einen ersten Faltmechanismus (31), einen dritten Faltmechanismus (33), einen zweiten Faltmechanismus (32) und einen vierten Faltmechanismus (34), die der Reihe nach angeordnet und jeweils zwischen zwei benachbarten Ständern (1) verbunden sind, und erste Gleithülsen (41), die jeweils gleitend an den Ständern (1) vorgesehen sind, wobei die ersten Gleithülsen (41) jeweils an kurze Rohre (5) angelenkt sind;
jeder des ersten Faltmechanismus (31) und des zweiten Faltmechanismus (32) umfasst eine erste Kreuzungsanordnung (311) und eine zweite Kreuzungsanordnung (312); jede der ersten Kreuzungsanordnung (311) und der zweiten Kreuzungsanordnung (312) umfasst ein erstes Kreuzrohr (3111) und ein zweites Kreuzrohr (3112); das erste Kreuzrohr (3111) ist an dem oberen Ende des entsprechenden Ständers (1) angelenkt, und das kurze Rohr (5) ist an das erste Kreuzrohr (3111) angelenkt; das kurze Rohr (5) ist mit einer zweiten Gleithülse (42) versehen; und das zweite Kreuzrohr (3112) ist an die zweite Gleithülse (42) des entsprechenden kurzen Rohres (5) angelenkt; und
die gefalteten Höhen der ersten Kreuzungsanordnung (311), der zweiten Kreuzungsanordnung (312), des dritten Faltmechanismus (33),
des vierten Faltmechanismus (34) und des unteren Faltmechanismus (2) sind nicht größer als die Höhe des oberen Endes des Ständers (1);
**dadurch gekennzeichnet, dass**
jeder des ersten Faltmechanismus (31) und des zweiten Faltmechanismus (32) ferner mindestens eine dritte Kreuzungsanordnung (313) umfasst, wobei die erste, dritte und zweite Kreuzungsanordnung sind der Reihe nach angelenkt sind; die gefaltete Höhe der dritten Kreuzungsanordnung (313) ist nicht größer als die Höhe des oberen Endes des Ständers (1);
der Wagen mit der nach dem Falten verringerten Höhe ferner Hubrohre umfasst;
wobei ein Ende des Hubrohres (100) an die zweite Gleithülse (42) angelenkt ist, und das Hubrohr (100) gleitend mit dem oberen Ende des entsprechenden Ständers (1) verbunden ist; und obere Enden der vier Hubrohre (100) dazu ausgebildet sind, jeweils mit vier Ecken eines Stoffträgers des Wagens mit der nach dem Falten verringerten Höhe verbunden zu werden;
wenn der zusammenklappbare Wagen von einem gefalteten Zustand in einen entfalteten Zustand übergeht, bewegen sich die oberen Enden der Hubrohre (100) vertikal von den oberen Enden der Ständer (1) weg, wenn ein Wagenrahmen entfaltet wird; und wenn der zusammenklappbare Wagen von dem entfalteten Zustand in den gefalteten Zustand übergeht, nähern sich die oberen Enden der Hubrohre (100) vertikal den oberen Enden der Ständer (1), wenn der Wagenrahmen gefaltet wird; und
die Höhe des zusammenklappbaren Wagens im gefalteten Zustand ist kleiner als eine Höhe des zusammenklappbaren Wagens im entfalteten Zustand, und die Höhe des zusammenklappbaren Wagens nach dem Falten des zusammenklappbaren Wagens verringert ist.

2. Wagen mit der nach dem Falten verringerten Höhe nach Anspruch 1, **dadurch gekennzeichnet, dass** der zusammenklappbare Wagen ferner eine erste Aufhängungsstange (71) und eine zweite Aufhängungsstange (72) umfasst;
ein oberes Ende der ersten Aufhängungsstange (71) ist an dem ersten Faltmechanismus (31) angelenkt; ein oberes Ende der zweiten Aufhängungsstange (72) ist an dem zweiten Faltmechanismus (32) angelenkt; und ein unteres Ende der ersten Aufhängungsstange (71) und ein unteres Ende der zweiten Aufhängungsstange (72) sind mit dem unteren Faltmechanismus (2) verbunden; und
die erste Aufhängungsstange (71) und die zweite Aufhängungsstange (72) sind flexible Stangen; und während des Faltens des zusammenklappbaren Wagens verformen sich die erste Aufhängungsstange (71) und die zweite Aufhängungsstange (72), und die beiden Enden der ersten Aufhängungsstange (71) nähern sich jeweils den beiden Enden der zweiten Aufhängungsstange (72).

3. Wagen mit der nach dem Falten verringerten Höhe nach Anspruch 2, **dadurch gekennzeichnet, dass** der untere Faltmechanismus (2) eine erste untere Stützanordnung (21) und eine zweite untere Stützanordnung (22) umfasst, die symmetrisch angeordnet und miteinander angelenkt sind; und jede der ersten unteren Stützanordnung (21) und der zweiten unteren Stützanordnung (22) umfasst einen ersten unteren Verbinder (210), ein erstes unteres Verbindungsrohr (211), ein zweites unteres Verbindungsrohr (212), ein drittes unteres Verbindungsrohr (213) und ein viertes unteres Verbindungsrohr (214);
die ersten Enden des ersten unteren Verbindungsrohrs (211), des zweiten unteren Verbindungsrohrs (212), des dritten unteren Verbindungsrohrs (213) und des vierten unteren Verbindungsrohrs (214) sind mit begrenztem Drehwinkel mit dem ersten unteren Verbinder (210) drehbar verbunden; und
die zweiten Enden des ersten unteren Verbindungsrohrs (211) und des zweiten unteren Verbindungsrohrs (212) sind jeweils mit begrenztem Drehwinkel mit den unteren Enden der entsprechenden Ständer (1) drehbar verbunden.

4. Wagen mit der nach dem Falten verringerten Höhe nach Anspruch 3, **dadurch gekennzeichnet, dass** der untere Faltmechanismus (2) ferner einen zweiten unteren Verbinder (216) und einen dritten unteren Verbinder (215) umfasst, die symmetrisch angeordnet sind; und das untere Ende der ersten Aufhängungsstange (71) und das untere Ende der zweiten Aufhängungsstange (72) sind jeweils mit dem zweiten unteren Verbinder (216) und dem dritten unteren Verbinder (215) verbunden;
das dritte untere Verbindungsrohr (213) der ersten unteren Stützanordnung (21) und das dritte untere Verbindungsrohr (213) der zweiten unteren Stützanordnung (22) sind mit begrenztem Drehwinkel drehbar mit dem dritten unteren Verbinder (215) verbunden; und
das vierte untere Verbindungsrohr (214) der ersten unteren Stützanordnung (21) und das vierte untere Verbindungsrohr (214) der zweiten unteren Stützanordnung (22) sind mit begrenztem Drehwinkel drehbar mit dem zweiten unteren Verbinder (216) verbunden.

5. Wagen mit der nach dem Falten verringerten Höhe nach Anspruch 1, **dadurch gekennzeichnet, dass** die vier Ständer (1) jeweils ein erster Ständer (11), ein zweiter Ständer (12), ein dritter Ständer (13) und ein vierter Ständer (14) sind;
jeder des dritten Faltmechanismus (33) und des vierten Faltmechanismus (34) umfasst ein erstes Kreuzrohr (341) und ein zweites Kreuzrohr (342), die miteinander angelenkt sind, sowie ein drittes Kreuzrohr (343) und ein viertes Kreuzrohr (344), die miteinander angelenkt sind; die ersten Enden des ersten Kreuzrohrs (341) und des dritten Kreuzrohrs (343) sind miteinander angelenkt; und die ersten Enden des zweiten Kreuzrohrs (342) und des vierten Kreuzrohrs (344) sind miteinander angelenkt;
in dem vierten Faltmechanismus (34) ist ein zweites Ende des ersten Kreuzrohrs (341) an dem oberen Ende des vierten Ständers (14) angelenkt, ein zweites Ende des dritten Kreuzrohrs (343) ist an dem oberen Ende des ersten Ständers (11) angelenkt, ein zweites Ende des zweiten Kreuzrohrs (342) ist an die erste Gleithülse (41) am vierten Ständer (14) angelenkt, und ein zweites Ende des vierten Kreuzrohrs (344) ist an die erste Gleithülse (41) am ersten Ständer (11) angelenkt; und
in dem dritten Faltmechanismus (33) ist ein zweites Ende des ersten Kreuzrohrs (341) an dem oberen Ende des zweiten Ständers (12) angelenkt, ein zweites Ende des dritten Kreuzrohrs (343) ist an dem oberen Ende des dritten Ständers (13) angelenkt, ein zweites Ende des zweiten Kreuzrohrs (342) ist an die erste Gleithülse (41) am zweiten Ständer (12) angelenkt, und ein zweites Ende des vierten Kreuzrohrs (344) ist an die erste Gleithülse (41) am dritten Ständer (13) angelenkt.

6. Wagen mit der nach dem Falten verringerten Höhe nach Anspruch 1, **dadurch gekennzeichnet, dass** der zusammenklappbare Wagen ferner einen Griffmechanismus (6) umfasst;
der Griffmechanismus (6) umfasst eine Teleskopstange (60), ein erstes horizontales Rohr (61), ein zweites horizontales Rohr (62) und ein Begrenzungselement (63); und die Teleskopstange (60) ist gleitend mit dem Begrenzungselement (63) verbunden; und
die ersten Enden des ersten horizontalen Rohrs (61) und des zweiten horizontalen Rohrs (62) sind jeweils mit begrenztem Drehwinkel mit den beiden Enden des Begrenzungselements (63) drehbar verbunden; und die zweiten Enden des ersten horizontalen Rohrs (61) und des zweiten horizontalen Rohrs (62) sind jeweils drehbar mit den unteren Enden von zwei Ständern (1) verbunden, die mit dem vierten Faltmechanismus (34) verbunden sind.

7. Wagen mit der nach dem Falten verringerten Höhe nach Anspruch 1, **dadurch gekennzeichnet, dass** die oberen Enden der Hubrohre (100) jeweils mit Verbindungselementen (104) versehen sind, und die Verbindungselemente (104) jeweils mit den Ecken des Stoffträgers des Wagens mit der nach dem Falten verringerten Höhe verbunden sind.

## Revendications

1. Wagon avec hauteur réduite après pliage, comprenant un wagon pliable, dans lequel le wagon pliable comprend quatre montants verticaux (1) disposés selon un motif rectangulaire et à des intervalles, un mécanisme de pliage inférieur (2) articulé entre les quatre montants verticaux (1), un premier mécanisme de pliage (31), un troisième mécanisme de pliage (33), un deuxième mécanisme de pliage (32), et un quatrième mécanisme de pliage (34) qui sont disposés en séquence et respectivement reliés entre deux montants verticaux adjacents (1), et des premiers manchons coulissants (41) respectivement ménagés de manière coulissante sur les montants verticaux (1), dans lequel les premiers manchons coulissants (41) sont respectivement articulés avec des tubes courts (5) ;
chacun du premier mécanisme de pliage (31) et du deuxième mécanisme de pliage (32) comprend un premier ensemble de croisement (311) et un deuxième ensemble de croisement (312) ; chacun du premier ensemble de croisement (311) et du deuxième ensemble de croisement (312) comprend un premier tube croisé (3111) et un deuxième tube croisé (3112) ; le premier tube croisé (3111) est articulé avec une extrémité supérieure du montant vertical correspondant (1), et le tube court (5) est articulé avec le premier tube croisé (3111) ; le tube court (5) est pourvu d'un deuxième manchon coulissant (42) ; et le deuxième tube croisé (3112) est articulé avec le deuxième manchon coulissant (42) du tube court correspondant (5) ; et
des hauteurs pliées du premier ensemble de croisement (311), du deuxième ensemble de croisement (312), du troisième mécanisme de pliage (33),
du quatrième mécanisme de pliage (34) et du mécanisme de pliage inférieur (2) ne sont pas plus grande qu'une hauteur de l'extrémité supérieure du montant vertical (1) ;
**caractérisée en ce que**
chacun du premier mécanisme de pliage (31) et du deuxième mécanisme de pliage (32) comprend en outre au moins un troisième ensemble de croisement (313) ; les premier, troisième et deuxième ensembles de croisement sont articulés en séquence ; la hauteur pliée du troisième ensemble de croisement (313) n'est pas plus grande qu'une hauteur de l'extrémité supérieure du montant vertical (1) ;
le wagon avec hauteur réduite après pliage comprend en outre des tubes de levage ;
dans lequel une extrémité du tube de levage (100) est articulée avec le deuxième manchon coulissant (42), et le tube de levage (100) est relié de manière coulissante à l'extrémité supérieure du montant vertical correspondant (1) ; et des extrémités supérieures des quatre tubes de levage (100) sont configurées pour être respectivement reliées aux quatre coins d'un plateau en toile du wagon avec hauteur réduite après pliage ;
lorsque le wagon pliable passe d'un état plié à un état déplié, les extrémités supérieures des tubes de levage (100) se déplacent verticalement en s'éloignant des extrémités supérieures des montants verticaux (1) lorsqu'un châssis de wagon est déplié ; et lorsque le wagon pliable passe de l'état déplié à l'état plié, les extrémités supérieures des tubes de levage (100) s'approchent verticalement des extrémités supérieures des montants verticaux (1) lorsque le châssis de wagon est plié ; et
une hauteur du wagon pliable à l'état plié est plus petite qu'une hauteur du wagon pliable à l'état déplié, et la hauteur du wagon pliable est réduite après pliage du wagon pliable.

2. Wagon avec hauteur réduite après pliage selon la revendication 1, **caractérisé en ce que** le wagon pliable comprend en outre une première tige de suspension (71) et une deuxième tige de suspension (72) ;
une extrémité supérieure de la première tige de suspension (71) est articulée avec le premier mécanisme de pliage (31) ; une extrémité supérieure de la deuxième tige de suspension (72) est articulée avec le deuxième mécanisme de pliage (32) ; et une extrémité inférieure de la première tige de suspension (71) et une extrémité inférieure de la deuxième tige de suspension (72) sont reliées au mécanisme de pliage inférieur (2) ; et
la première tige de suspension (71) et la deuxième tige de suspension (72) sont des tiges flexibles ; et lors d'un processus de pliage du wagon pliable, la première tige de suspension (71) et la deuxième tige de suspension (72) se déforment, et les deux extrémités de la première tige de suspension (71) s'approchent respectivement des deux extrémités de la deuxième tige de suspension (72).

3. Wagon avec hauteur réduite après pliage selon la revendication 2, **caractérisé en ce que** le mécanisme de pliage inférieur (2) comprend un premier ensemble de support inférieur (21) et un deuxième ensemble de support inférieur (22) qui sont disposés symétriquement et articulés l'un avec l'autre ; et chacun du premier ensemble de support inférieur (21) et du deuxième ensemble de support inférieur (22) comprend un premier raccord inférieur (210), un premier tube de liaison inférieur (211), un deuxième tube de liaison inférieur (212), un troisième tube de liaison inférieur (213) et un quatrième tube de liaison inférieur (214) ;
des premières extrémités du premier tube de liaison inférieur (211), du deuxième tube de liaison inférieur (212), du troisième tube de liaison inférieur (213) et du quatrième tube de liaison inférieur (214) sont reliées de manière rotative selon un angle limité au premier raccord inférieur (210) ; et
des deuxièmes extrémités du premier tube de liaison inférieur (211) et du deuxième tube de liaison inférieur (212) sont respectivement reliées de manière rotative selon un angle limité aux extrémités inférieures de montants verticaux correspondants (1).

4. Wagon avec hauteur réduite après pliage selon la revendication 3, **caractérisé en ce que** le mécanisme de pliage inférieur (2) comprend en outre un deuxième raccord inférieur (216) et un troisième raccord inférieur (215) qui sont disposés symétriquement ; et l'extrémité inférieure de la première tige de suspension (71) et l'extrémité inférieure de la deuxième tige de suspension (72) sont respectivement reliées au deuxième raccord inférieur (216) et au troisième raccord inférieur (215) ;
le troisième tube de liaison inférieur (213) du premier ensemble de support inférieur (21) et le troisième tube de liaison inférieur (213) du deuxième ensemble de support inférieur (22) sont reliés de manière rotative selon un angle limité au troisième raccord inférieur (215) ; et
le quatrième tube de liaison inférieur (214) du premier ensemble de support inférieur (21) et le quatrième tube de liaison inférieur (214) du deuxième ensemble de support inférieur (22) sont reliés de manière rotative selon un angle limité au deuxième raccord inférieur (216).

5. Wagon avec hauteur réduite après pliage selon la revendication 1, **caractérisé en ce que** les quatre montants verticaux (1) sont un premier montant vertical (11), un deuxième montant vertical (12), un troisième montant vertical (13) et un quatrième montant vertical (14), respectivement ;
chacun du troisième mécanisme de pliage (33) et du quatrième mécanisme de pliage (34) comprend un premier tube de croisement (341) et un deuxième tube de croisement (342) qui sont articulés l'un avec l'autre, ainsi qu'un troisième tube de croisement (343) et un quatrième tube de croisement (344) qui sont articulés l'un avec l'autre ; des premières extrémités du premier tube de croisement (341) et du troisième tube de croisement (343) sont articulées l'une avec l'autre ; et des premières extrémités du deuxième tube de croisement (342) et du quatrième tube de croisement (344) sont articulées l'une avec l'autre ;
dans le quatrième mécanisme de pliage (34), une deuxième extrémité du premier tube de croisement (341) est articulée avec une extrémité supérieure du quatrième montant vertical (14), une deuxième extrémité du troisième tube de croisement (343) est articulée avec une extrémité supérieure du premier montant vertical (11), une deuxième extrémité du deuxième tube de croisement (342) est articulée avec le premier manchon coulissant (41) sur le quatrième montant vertical (14), et une deuxième extrémité du quatrième tube de croisement (344) est articulée avec le premier manchon coulissant (41) sur le premier montant vertical (11) ; et
dans le troisième mécanisme de pliage (33), une deuxième extrémité du premier tube de croisement (341) est articulée avec une extrémité supérieure du deuxième montant vertical (12), une deuxième extrémité du troisième tube de croisement (343) est articulée avec une extrémité supérieure du troisième montant vertical (13), une deuxième extrémité du deuxième tube de croisement (342) est articulée avec le premier manchon coulissant (41) sur le deuxième montant vertical (12), et une deuxième extrémité du quatrième tube de croisement (344) est articulée avec le premier manchon coulissant (41) sur le troisième montant vertical (13).

6. Wagon avec hauteur réduite après pliage selon la revendication 1, **caractérisé en ce que** le wagon pliable comprend en outre un mécanisme de poignée (6) ;
le mécanisme de poignée (6) comprend une tige télescopique (60), un premier tube horizontal (61), un deuxième tube horizontal (62) et un élément de limitation (63) ; et la tige télescopique (60) est reliée de manière coulissante à l'élément de limitation (63) ; et
des premières extrémités du premier tube horizontal (61) et du deuxième tube horizontal (62) sont respectivement reliées de manière rotative selon un angle limité à deux extrémités de l'élément de limitation (63) ; et des deuxièmes extrémités du premier tube horizontal (61) et du deuxième tube horizontal (62) sont respectivement reliées de manière rotative à des extrémités inférieures de deux montants verticaux (1) reliés au quatrième mécanisme de pliage (34).

7. Wagon avec hauteur réduite après pliage selon la revendication 1, **caractérisé en ce que** les extrémités supérieures des tubes de levage (100) sont respectivement pourvues d'éléments de liaison (104), et les éléments de liaison (104) sont respectivement reliés aux coins du plateau en toile du wagon avec hauteur réduite après pliage.
